# DEMANDE DE BREVET EUROPEEN

(11) **EP 0 942 206 A1**
(43) Date de publication de la demande: **15.09.1999**
(21) Numéro de dépôt: 99400612.0
(22) Date de dépôt: 12.03.1999
(51) Int. Cl.: F16J 15/12

(54) **Armature métallique pour profilé en polymère**

(30) Priorité: 13.03.1998 FR 9803124
(71) Demandeur: HUTCHINSON GmbH, 52003 Aachen (DE)
(72) Inventeur: Gorges, Hans-Peter, 66663 Merzig (DE)
(74) Mandataire: Hurwic, Aleksander

(57) **Abrégé**

Armature pour profilé extrudé, formée par découpe ou estampage d'un feuillard métallique mince, cette armature (10) étant recouverte sur au moins une partie de sa largeur par une bande adhésive (18) qui peut être du type fusible, comprenant des fils longitudinaux (20) inextensibles de fibre de verre ou de matière textile.

L'invention permet d'éviter les allongement et les ruptures des armatures à leur passage dans une filière d'extrusion.

## Description

L'invention concerne une armature pour un profilé en polymère tel notamment qu'une garniture d'étanchéité pour porte ou analogue de véhicule automobile, cette armature étant réalisée par découpe ou estampage d'un feuillard métallique et permettant d'une part de donner une forme désirée au profilé et d'autre part de le monter sur un support par pincement élastique du support.

De telles armatures sont bien connues dans la technique et comprennent en général une série d'éléments transversaux reliés entre eux par un ou plusieurs éléments longitudinaux. Elles sont pliées en U et passent dans une filière d'extrusion pour être recouvertes d'une couche d'élastomère soumise ensuite à une vulcanisation.

Lors de son passage dans la filière d'extrusion, l'armature est soumise à un effort de traction non négligeable, qui entraîne sa déformation par allongement et qui peut même provoquer sa rupture, notamment lors des phases de mise au point de l'extrusion, quand l'écoulement de matière n'est pas encore à un optimum.

Les moyens qui ont été utilisés jusqu'à présent pour éviter cet inconvénient sont relativement complexes et coûteux (optimisation des formes des armatures, augmentation de leur épaisseur, déroulement de fils dans la filière d'extrusion, etc...). En outre, ces moyens connus ne permettent pas d'éviter un phénomène de déformation de l'armature connu sous le nom de "côtes de chien" ou de "hungry horse", selon lequel les parties d'extrémité des éléments transversaux de l'armature font plus ou moins saillie, de façon irrégulière, dans l'élastomère extrudé.

L'invention a notamment pour but d'éviter les inconvénients précités.

Elle propose, à cet effet, une armature du type précité, formée d'un feuillard métallique et comprenant une succession d'éléments transversaux et au moins un élément longitudinal reliant entre eux les éléments transversaux, caractérisée en ce qu'elle est recouverte sur au moins une partie de sa largeur par des fils longitudinaux sensiblement inextensibles fixés par collage à ladite armature et s'opposant à son allongement sous l'effet d'une traction.

Dans un mode de réalisation préféré de l'invention, ces fils longitudinaux sont des fils de fibre de verre ou de matière textile portés par une bande de matière adhésive qui peut être ou non du type fusible.

Une telle armature présente l'avantage d'être inextensible et d'avoir un meilleur état de surface, dans sa partie recouverte par la bande adhésive précitée.

En fonction des résistances en traction souhaitées pour l'armature et des efforts auxquels elle sera soumise, on peut recouvrir une majeure partie de la largeur de l'armature ou au contraire une faible partie de cette largeur, au moyen d'une seule bande adhésive ou de plusieurs bandes adhésives portant les fils précités et collées sur l'armature à distance les unes des autres.

Avantageusement, cette bande adhésive est à collage par pression d'un type disponible dans le commerce et elle peut être réalisée en une matière résistant aux températures d'extrusion et de vulcanisation de l'élastomère utilisé pour la fabrication du profilé.

En variante, elle peut être réalisée en une matière adhésive fondant à la température d'extrusion de l'élastomère.

L'invention concerne également un profilé comportant une armature métallique recouverte d'au moins une couche d'élastomère extrudé, caractérisé en ce que cette armature est du type inextensible décrit dans ce qui précède.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue partielle schématique en élévation d'une armature métallique ;
- les figures 2 à 5 représentent schématiquement cette armature rendue inextensible au moyen d'une ou de plusieurs bandes adhésives renforcées ;
- la figure 6 est une vue schématique partielle en coupe et en perspective d'un profilé comprenant une armature selon l'invention.

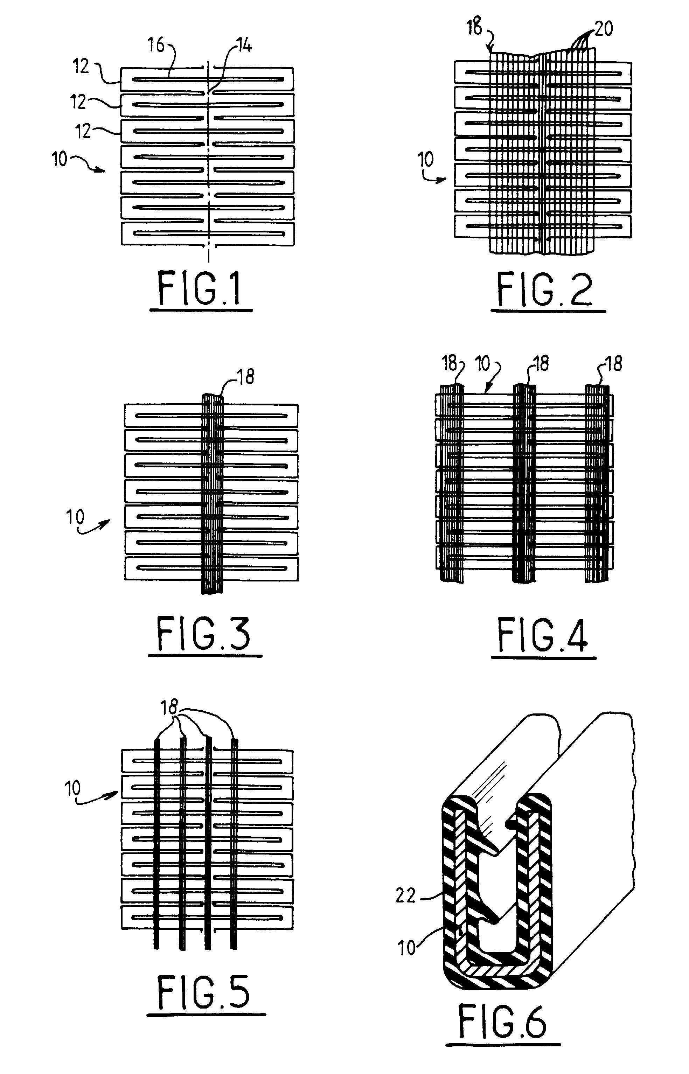

L'armature représentée schématiquement en figure 1 est formée par découpe ou estampage d'un feuillard métallique ayant par exemple une épaisseur de 0,5 mm et une largeur de quelques dizaines de mm, et comporte une série d'éléments transversaux 12 parallèles qui sont reliés entre eux dans leur partie médiane par un élément longitudinal 14 et qui comportent chacun une fente 16 qui s'étend sur la majeure partie de la longueur de l'élément transversal 12. Cette structure permet un bon ancrage de l'armature 10 dans une couche d'élastomère lors de l'extrusion de cette couche d'élastomère, mais lui confère également une certaine extensibilité se traduisant par un allongement et des déformations irrégulières de l'armature à son passage dans une filière d'extrusion, cet allongement et ces déformations étant même susceptibles de provoquer la rupture de l'armature, comme indiqué plus haut.

Selon la présente invention, ces inconvénients sont évités, comme représenté en figure 2, par la pose sur l'armature 10 d'une bande longitudinale 18 inextensible qui de préférence est du type adhésif par pression de telle sorte que sa pose sur l'armature 10 suffit à la fixer sur l'armature.

Dans un mode de réalisation préféré de l'invention, cette bande longitudinale est une bande adhésive renforcée par des fils longitudinaux 20 inextensibles, tels par exemple que des fils de fibre de verre ou des fils textiles, et commercialisée par exemple par la société 3M.

Dans une première forme de réalisation, cette bande est en une matière plastique résistant aux températures d'extrusion et de vulcanisation des élastomères susceptibles d'être utilisés pour former des profilés tels que ceux utilisables comme garnitures d'étanchéité ou analogues pour véhicule automobile.

Dans ce cas, les fils inextensibles peuvent être fixés par collage sur une face adhésive de la bande, ou celle-ci peut être extrudée sur les fils, qui sont alors incorporés à cette bande.

En variante, la bande adhésive peut être en une matière ayant une température de fusion inférieure à la température d'extrusion de l'élastomère.

Dans l'exemple de réalisation de la figure 2, la bande longitudinale 18 recouvre un peu plus de la moitié de la largeur de l'armature 10 et se trouve au milieu de celle-ci. Elle peut avoir une largeur de 25 mm et une épaisseur de 0,1 mm. La résistance à la rupture en traction de l'armature 10, qui est d'environ 50 N lorsqu'elle ne comprend pas la bande longitudinale 18, est portée à environ 800 N lorsqu'elle comprend cette bande.

Dans l'exemple de réalisation de la figure 4, la bande longitudinale 18 ne recouvre qu'une faible partie de la largeur de l'armature 10 et est collée au milieu de celle-ci, le long de son axe longitudinal. Elle est 5 fois moins large que la bande 18 de la figure 3 et permet d'augmenter jusqu'à 200 N environ la résistance à la rupture en traction de l'armature 10.

Dans l'exemple de réalisation de la figure 4, trois bandes longitudinales 18 ayant chacune sensiblement la même largeur que la bande 18 de la figure 3, sont fixées par collage sur l'armature 10, l'une au milieu de l'armature le long de son axe longitudinal et les deux autres au voisinage des bords longitudinaux de l'armature.

Dans ce cas, la résistance à la rupture en traction de l'armature 10 est portée à environ 600 N.

Dans l'exemple de réalisation de la figure 5, quatre bandes longitudinales 18 très étroites sont collées sur l'armature 10, à égale distance les unes des autres, ou à des distances différentes les unes des autres, en étant réparties sur la largeur de l'armature 10 de façon régulière ou irrégulière, selon les cas.

Dans ce cas, la résistance à la rupture de l'armature 10 est par exemple de 150 N environ.

On a représenté schématiquement en figure 6 un exemple d'un profilé selon l'invention qui comprend une couche 22 d'élastomère, extrudée sur l'armature 10 comportant la ou les bandes inextensibles 18 décrites dans ce qui précède. L'armature 10 est pliée en U avant de passer dans une filière d'extrusion où elle est recouverte de la couche 22 d'élastomère. Les bandes inextensibles 18 peuvent être posées sur les armatures 10 avant ou après leur pliage en U.

Lorsque les bandes 18 sont du type non fusible à la température d'extrusion, les fils 20 restent collés sur l'armature 10 au cours de l'extrusion de l'élastomère et les bandes 18 améliorent nettement l'état de surface de l'armature.

Lorsque les bandes 18 sont du type fusible, les fils 20 sont noyés dans l'élastomère extrudé et restent sensiblement au contact de l'armature ou à très faible distance de celle-ci, en s'opposant à son allongement et à ses déformations.

De plus et dans tous les cas, les fils 20 s'opposent également au retrait de l'élastomère au refroidissement.

## Revendications

1. Armature pour profilé en polymère, formée d'un feuillard métallique comprenant une succession d'éléments transversaux (12) et au moins un élément longitudinal (14) reliant entre eux les éléments transversaux, ladite armature étant recouverte sur au moins une partie de sa largeur par des fils longitudinaux (20) sensiblement inextensibles, caractérisée en ce que les fils longitudinaux (20) sont fixés par collage à ladite armature et s'opposant à son allongement sous l'effet d'une traction.

2. Armature selon la revendication 1, caractérisée en ce que les fils longitudinaux (20) sont portés par une bande adhésive (18).

3. Armature selon la revendication 2, caractérisée en ce que ladite bande adhésive (18) résiste aux températures d'extrusion et de vulcanisation des élastomères.

4. Armature selon la revendication 2, caractérisée en ce que la bande (18) est du type fusible.

5. Armature selon l'une des revendications 1 à 4, caractérisée en ce que les fils longitudinaux (20) sont des fils de fibre de verre ou de matière textile.

6. Armature selon l'une des revendications précédentes, caractérisée en ce que les fils longitudinaux (20) recouvrent une majeure partie de la largeur de l'armature.

7. Armature selon l'une des revendications 1 à 5, caractérisée en ce que les fils longitudinaux (20) recouvrent une faible partie de la largeur de l'armature.

8. Armature selon l'une des revendications 1 à 5, caractérisée en ce qu'elle comprend plusieurs groupes de fils longitudinaux (20) collés sur l'armature à distance les unes des autres.

9. Profilé comportant une armature recouverte d'au moins une couche (22) d'élastomère extrudé, caractérisé en ce que l'armature (10) est du type inextensible décrit dans l'une des revendications précédentes.
